# EUROPÄISCHE PATENTSCHRIFT

(11) **EP 3 177 491 B1**
(45) Veröffentlichungstag und Bekanntmachung des Hinweises auf die Patenterteilung: **06.06.2018**
(21) Anmeldenummer: 15731009.5
(22) Anmeldetag: 16.06.2015
(51) Int. Cl.: B60T 8/172

(54) **VERFAHREN UND VORRICHTUNG ZUM BETREIBEN EINES FAHRZEUGS**
METHOD AND DEVICE FOR OPERATING A VEHICLE
PROCÉDÉ ET DISPOSITIF SERVANT À FAIRE FONCTIONNER UN VÉHICULE

(30) Priorität: 04.08.2014 DE 102014215306
(43) Veröffentlichungstag der Anmeldung: 14.06.2017
(73) Patentinhaber: Robert Bosch GmbH, 70442 Stuttgart (DE)
(72) Erfinder: FEINAUER, Jochen, 74632 Neuenstein (DE); MENGELKAMP, Markus, 74321 Bietigheim-Bissingen (DE); STREHLE, Alfred, 70736 Fellbach (DE)
(86) Internationale Anmeldenummer: PCT/EP2015/063428
(87) Internationale Veröffentlichungsnummer: WO 2016/020093

(56) Entgegenhaltungen:
- DE-C1- 4 410 937
- GB-A- 2 323 138
- US-A1- 2005 234 628
- US-A1- 2010 131 145
- US-B1- 6 322 167
- US-B1- 6 375 280
- US-B1- 6 381 531
- US-B1- 6 644 758

## Beschreibung

Die Erfindung betrifft ein Verfahren sowie eine Vorrichtung zum Betreiben eines Fahrzeugs. Die Erfindung betrifft ferner ein System für ein Fahrzeug sowie ein Computerprogrammprodukt.

### Stand der Technik

Bekannt sind elektronische Stabilitätsprogramm-(ESP)-Regelsysteme, die mittels einer Druckerzeugungseinrichtung aktiv den für eine ESP-Regelung oder VAF-Funktionalitäten benötigten Bremsdruck über eine Pumpe aufbauen und über mehrkanalige Ansteuerung eine sichere Abbremsung eines Fahrzeugs mittels unterlagerten Antiblockiersystem-(ABS)-Regelalgorithmus gewährleisten. Die Abkürzung "VAF" steht für "Value Added Function", das bedeutet verkaufbare Zusatzfunktionen, wie zum Beispiel Berganfahrassistent, Notbremsassistent usw. Bekannt sind Regelsysteme und deren Algorithmus, die als Zweikanalsysteme oder Vierkanalsysteme ausgelegt sind. Ebenso ist die achsweise Arbitrierung nach dem sogenannten Select-High- und Select-Low-Prinzip bekannt. Aus der US6381531 ist es bekannt, die Bremswirkung an den beiden Rädern gemeinsam einzustellen. Das Dokument offenbart ein Verfahren, wobei zwei Betriebsmodi vorgesehen sind, die abhängig von den vorliegenden Reibwerten an den Rädern und abhängig von der Fahrzeuggeschwindigkeit wählbar sind.

### Offenbarung der Erfindung

Die der Erfindung zugrunde liegende Aufgabe kann darin gesehen werden, ein Verfahren zum Betreiben eines Fahrzeugs bereitzustellen, das es ermöglicht, mittels eines einkanaligen Bremskreises das Fahrzeug sicher abzubremsen oder zu verzögern.

Die der Erfindung zugrunde liegende Aufgabe kann auch darin gesehen werden, eine entsprechende Vorrichtung zum Betreiben eines Fahrzeugs anzugeben.

Die der Erfindung zugrunde liegende Aufgabe kann auch darin gesehen werden, ein entsprechendes System für ein Fahrzeug bereitzustellen.

Die der Erfindung zugrunde liegende Aufgabe kann des Weiteren darin gesehen werden, ein entsprechendes Computerprogrammprodukt anzugeben.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs bereitgestellt, umfassend die folgenden Schritte:
- Ermitteln eines jeweiligen Kraftschlusses der Fahrzeugräder.
- Ermitteln je Achse des Fahrzeugs, welcher der jeweiligen Kraftschlüsse der Fahrzeugräder der größte ist,
- Ermitteln, welches von den jeweiligen größten Kraftschlüssen je Achse der kleinste Kraftschluss ist,
- Steuern einer Vordruckerzeugungseinrichtung abhängig von dem ermittelten kleinsten Kraftschluss der jeweiligen größten Kraftschlüsse je Achse, so dass
- die Vordruckerzeugungseinrichtung abhängig von dem ermittelten kleinsten Kraftschluss einen Bremsdruck in einem einkanaligen Bremskreis für die Fahrzeugräder regelt, so dass
- das Fahrzeug entsprechend dem geregelten Bremsdruck verzögert wird.

Gemäß einem weiteren Aspekt wird eine Vorrichtung zum Betreiben eines Fahrzeugs bereitgestellt, umfassend:
- einen Prozessor,
- einen Speicher und
- ein Programm, wobei
- das Programm in dem Speicher abgelegt und konfiguriert ist, um auf dem Prozessor ausgeführt zu werden, wobei das Programm Anweisungen aufweist zum:
- Ermitteln eines jeweiligen Kraftschlusses der Fahrzeugräder.
- Ermitteln je Achse des Fahrzeugs, welches der jeweiligen Kraftschlüsse der Fahrzeugräder der größte ist,
- Ermitteln, welches von den jeweiligen größten Kraftschlüssen je Achse der kleinste Kraftschluss ist,
- Steuern einer Vordruckerzeugungseinrichtung abhängig von dem ermittelten kleinsten Kraftschluss der jeweiligen größten Kraftschlüsse je Achse, so dass
- die Vordruckerzeugungseinrichtung abhängig von dem ermittelten kleinsten Kraftschluss einen Bremsdruck in einem einkanaligen Bremskreis für die Fahrzeugräder regeln kann, so dass
- das Fahrzeug entsprechend dem geregelten Bremsdruck verzögert werden kann.

Nach noch einem Aspekt wird ein System für ein Fahrzeug bereitgestellt, wobei das System die erfindungsgemäße Vorrichtung umfasst sowie ferner eine Vordruckerzeugungseinrichtung, die ausgebildet ist, einen Bremsdruck in einem einkanaligen Bremskreis für die Fahrzeugräder des Fahrzeugs zu regeln.

Gemäß einem weiteren Aspekt wird ein Computerprogrammprodukt mit Anweisungen bereitgestellt, die zur Ausführung auf einem Prozessor konfiguriert sind und die bei ihrer Ausführung auf dem Prozessor der erfindungsgemäßen Vorrichtung oder dem erfindungsgemäßen System die Vorrichtung respektive das System veranlassen, das erfindungsgemäße Verfahren auszuführen.

Nach einem weiteren Aspekt ist ein Fahrzeug vorgesehen, welches die erfindungsgemäße Vorrichtung oder das erfindungsgemäße System umfasst.

Die Erfindung umfasst also insbesondere den Gedanken, pro Achse des Fahrzeugs das Select-High-Prinzip anzuwenden. Das Select-High-Prinzip sagt aus, dass das Fahrzeugrad mit der kleinsten Blockierneigung, also mit dem größten Kraftschluss, den gemeinsamen Bremsdruck im Bremskreis bestimmt.

Erfindungsgemäß ist dann vorgesehen, dass zwischen den zwei (bei zwei Achsen, wobei die Erfindung beliebig skalierbar ist, zum Beispiel sind drei, vier, fünf oder 6 Achsen vorgesehen) Select-High-Ergebnissen eine Select-Low-Arbitrierung durchgeführt wird. Die Select-Low-Arbitrierung ist eine Arbitrierung basierend auf dem Select-Low-Prinzip. Das Select-Low-Prinzip sagt aus, dass das Fahrzeugrad mit der größten Blockierneigung, also mit dem kleinsten Kraftschluss den gemeinsamen Bremsdruck im Bremskreis bestimmt. Das Ergebnis dieser Select-Low-Arbitrierung (also der ermittelte kleinste Kraftschluss) wird für die Ansteuerung für die Vordruckerzeugungseinrichtung verwendet. Das heißt, dass das Ergebnis dieser Select-Low-Arbitrierung als Basis für entsprechende Steuersignale für die Vordruckerzeugungseinrichtung verwendet wird.

Durch die erfindungsgemäßen Schritte des Anwendens des Select-High-Prinzips und des Select-Low-Prinzips kann in vorteilhafter Weise erreicht werden, dass ein geeigneter Kompromiss aus Bremsleistung, Stabilität und Lenkbarkeit des Fahrzeugs auf allen Fahrbahnen inklusive deren Übergänge erreicht wird. Eine sichere Abbremsung des Fahrzeugs mittels einer Vordruckvariation (einkanalig) wird somit ermöglicht. Somit ist in vorteilhafter Weise ferner eine Redundanz zu eventuell im Fahrzeug bereits vorhandenen ESP-Regelsystemen und/oder ABS-Regelsystemen geschaffen. Hierbei steht "ESP" für elektronisches Stabilitätsprogramm. "ABS" steht für Antiblockiersystem.

Nach einer Ausführungsform ist die Vordruckerzeugungseinrichtung ein Bremskraftverstärker. Der Bremskraftverstärker ist beispielsweise ein elektromechanischer Bremskraftverstärker. Insbesondere ist der Bremskraftverstärker ein sogenannter iBooster, wie ihn die Firma Robert Bosch entwickelt hat.

Dass der Bremskreis ein einkanaliger Bremskreis ist, heißt insbesondere, dass dieser Bremskreis sämtliche Fahrzeugräder verzögert oder abbremst. Das heißt, dass keine individuelle Verzögerung der Fahrzeugräder vorgesehen ist. Vielmehr werden sämtliche Fahrzeugräder mittels des einkanaligen Bremskreises verzögert oder abgebremst. Es handelt sich also bei der Regelung um eine einkanalige Regelung.

Gemäß einer Ausführungsform ist vorgesehen, dass während der Verzögerung entsprechend dem geregelten Bremsdruck momentane Kraftschlüsse aller Fahrzeugräder und eine momentane Fahrzeugverzögerung ermittelt werden, wobei, wenn die momentane Fahrzeugverzögerung größer gleich einem vorbestimmten Fahrzeugverzögerungsschwellwert ist, ermittelt wird, welcher der momentanen Kraftschlüsse der kleinste ist, wobei die Vordruckerzeugungseinrichtung abhängig von dem kleinsten momentanen Kraftschluss gesteuert wird, so dass die Vordruckerzeugungseinrichtung abhängig von dem kleinsten momentanen Kraftschluss den Bremsdruck in dem Bremskreis regelt, so dass das Fahrzeug entsprechend dem geregelten Bremsdruck weiter verzögert wird.

Dadurch wird insbesondere der technische Vorteil bewirkt, dass die Reifen geschont werden. Insbesondere wird der technische Vorteil bewirkt, dass plötzliche auftretende Giermomente bei einseitig nachlassender Griffigkeit der Fahrbahn vermieden werden können. Das heißt, dass in dieser Ausführungsform ab Erreichen einer vorbestimmten Fahrzeugverzögerung die Arbitrierung nach einem fahrzeugweiten Select-Low-Prinzip durchgeführt wird. Dies also insbesondere bei einer Fahrzeugabbremsung oder Fahrzeugverzögerung auf griffigen Fahrbahnen. Das heißt, dass ab der vorbestimmten Fahrzeugverzögerung der momentane kleinste Kraftschluss als Basis für die Regelung des Bremsdrucks in dem einkanaligen Bremskreis verwendet wird. Die vorbestimmte Fahrzeugverzögerung ist insbesondere ein voreingestellter Wert, der beispielsweise fest in der Vorrichtung abgespeichert ist.

Gemäß einer anderen Ausführungsform ist vorgesehen, dass bei einer Blockage von bis zu einem Fahrzeugrad je Achse während der Verzögerung des Fahrzeugs die Blockage zugelassen wird, so dass die Vordruckerzeugungseinrichtung unabhängig von der Blockage gesteuert wird, so dass der Bremsdruck unabhängig von der Blockage geregelt wird. Das heißt also insbesondere, dass die Blockage von einem Rad pro Achse zugelassen wird. Der Bremsdruck wird hierbei unabhängig der blockierten Räder (oder des blockierten Rads) geregelt.

Dadurch wird insbesondere der technische Vorteil bewirkt, dass ein Kompromiss aus Bremsweg, Stabilität und Lenkbarkeit erreicht werden kann.

Dass die Blockage zugelassen wird, also dass der Bremsdruck unabhängig von der Blockage geregelt wird, heißt insbesondere, dass die Regelung entsprechend dem vorher ermittelten Kraftschluss weiter unverändert durchgeführt wird. Die momentane Regelung des Bremsdrucks wird somit von der Blockage nicht beeinflusst.

Gemäß einer weiteren Ausführungsform ist vorgesehen, dass das Ermitteln, welches von den jeweiligen größten Kraftschlüssen je Achse der kleinste Kraftschluss ist, durchgeführt wird, indem ein Stellsignal aus mehreren Stellsignalen ausgewählt wird, die basierend auf den jeweiligen größten Kraftschlüssen je Fahrzeugachse gebildet werden. Dadurch wird vorzugsweise in vorteilhafter Weise die Arbitrierung vereinfacht und Rechenzeit eingespart, da dann nur für einen Regler je individueller Radbremse anstatt vier Reglern für 4 individuelle Radbremsen gerechnet werden muss, wobei im Fall von 4 Reglern hinterher die 4 Regler-Ausgänge arbitriert werden müssen und das Arbitrierungsergebnis eventuell in die 4-Regler zurückgeführt werden muss, was einen erheblichen Rechenaufwand erfordert. Das heißt, dass erfindungsgemäß insbesondere eine Einkanalansteuerung durch einen Regler erfolgt. Ein Regler steuert also vorzugsweise alle 4 individuellen Radbremsen des Fahrzeugs.

Das Stellsignal basiert beispielsweise auf der Radgeschwindigkeit. Das heißt beispielsweise, dass das Stellsignal ein Radgeschwindigkeitssignal ist.

Nach noch einer Ausführungsform ist vorgesehen, dass das Ermitteln, welches von den jeweiligen größten Kraftschlüssen je Achse der kleinste Kraftschluss ist, umfasst:
- Ermitteln einer jeweiligen Fahrzeugradgeschwindigkeit der Fahrzeugräder
- Auswählen der kleinsten Fahrzeugradgeschwindigkeit aus den ermittelten Fahrzeugradgeschwindigkeiten,
- Definieren, dass der Kraftschluss desjenigen Fahrzeugsrads mit der kleinsten Fahrzeugradgeschwindigkeit der kleinste Kraftschluss der jeweiligen größten Kraftschlüsse je Achse ist.

Nach einer Ausführungsform weist das Programm Anweisungen zum Durchführen der Schritte des Verfahrens zum Betreiben eines Fahrzeugs auf. Dies in sämtlichen offenbarten Ausführungsformen.

Nach einer weiteren Ausführungsform wird das Ermitteln des jeweiligen Kraftschlusses der Fahrzeugräder basierend auf einer jeweiligen Raddrehzahl der Fahrzeugräder (also auf Raddrehzahlinformationen) durchgeführt. Das heißt, dass nach einer Ausführungsform je Fahrzeugrad ein Drehzahlfühler vorgesehen ist, der eine Raddrehzahl des entsprechenden Fahrzeugrads erfassen kann. Basierend auf diesen Raddrehzahlen, also auf den diesen Raddrehzahlen entsprechenden Raddrehzahlsignalen, wird dann der jeweilige Kraftschluss ermittelt. Vorzugsweise werden für das Ermitteln des jeweiligen Kraftschlusses Raddrehzahlinformationen von zwei Fahrzeugrädern einer Achse oder aller vier Fahrzeugräder oder wahlweise auch eine mittlere Achsdrehzahl verwendet.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs und
- Fig. 3: ein System für ein Fahrzeug.

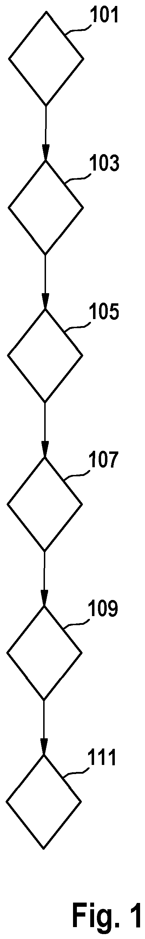

Fig. 1 zeigt ein Ablaufdiagramm eines Verfahrens zum Betreiben eines Fahrzeugs.

Gemäß einem Schritt 101 wird ein jeweiliger Kraftschluss der Fahrzeugräder ermittelt. In einem Schritt 103 wird je Achse des Fahrzeugs ermittelt, welcher der jeweiligen Kraftschlüsse der Fahrzeugräder der größte ist. In einem Schritt 105 wird ermittelt, welches von den jeweiligen größten Kraftschlüssen je Achse der kleinste Kraftschluss ist. In einem Schritt 107 wird eine Vordruckerzeugungseinrichtung abhängig von dem ermittelten kleinsten Kraftschluss der jeweiligen größten Kraftschlüsse je Achse gesteuert, sodass gemäß einem Schritt 109 die Vordruckerzeugungseinrichtung abhängig von dem ermittelten kleinsten Kraftschluss einen Bremsdruck in einem einkanaligen Bremskreis für die Fahrzeugräder regelt, sodass in einem Schritt 111 das Fahrzeug entsprechend dem geregelten Bremsdruck verzögert wird.

Der Druck, der mittels der Vordruckerzeugungseinrichtung in dem einkanaligen Bremskreis geregelt wird, wird also vorzugsweise derart moduliert, dass ein geeigneter Kompromiss aus Bremsleistung, Stabilität und Lenkbarkeit des Fahrzeugs auf allen Fahrbahnen inklusive deren Übergängen erreicht wird. Hierbei ist insbesondere vorgesehen, dass die Vordruckerzeugungseinrichtung ein Bremskraftverstärker, insbesondere ein elektromechanischer Bremskraftverstärker, beispielsweise ein iBooster, ist. Die Erfindung zeichnet sich hier insbesondere dadurch aus, dass lediglich als Hardware nur die Vordruckerzeugungseinrichtung und Raddrehzahlinformationen von zwei Fahrzeugrädern einer Achse oder aller vier Fahrzeugräder oder wahlweise auch eine mittlere Achsdrehzahl für den erfindungsgemäßen Algorithmus, also die erfindungsgemäßen Verfahrensschritte, benötigt werden. Es ist somit in vorteilhafter Weise nicht notwendig, noch zusätzliche Steller radindividuell oder bremskreisindividuell anzusteuern. Dennoch ist eine Unterstützung einer Anforderung einer möglichen sicheren Abbremsung, insbesondere bei autonomem/automatisiertem Fahren, durch Ausnutzung der Hardware-Redundanz zur aktiven Bremsdruckerzeugung beispielsweise einerseits mit dem iBooster und vorzugsweise andererseits einer ESP-Hydraulik gegeben.

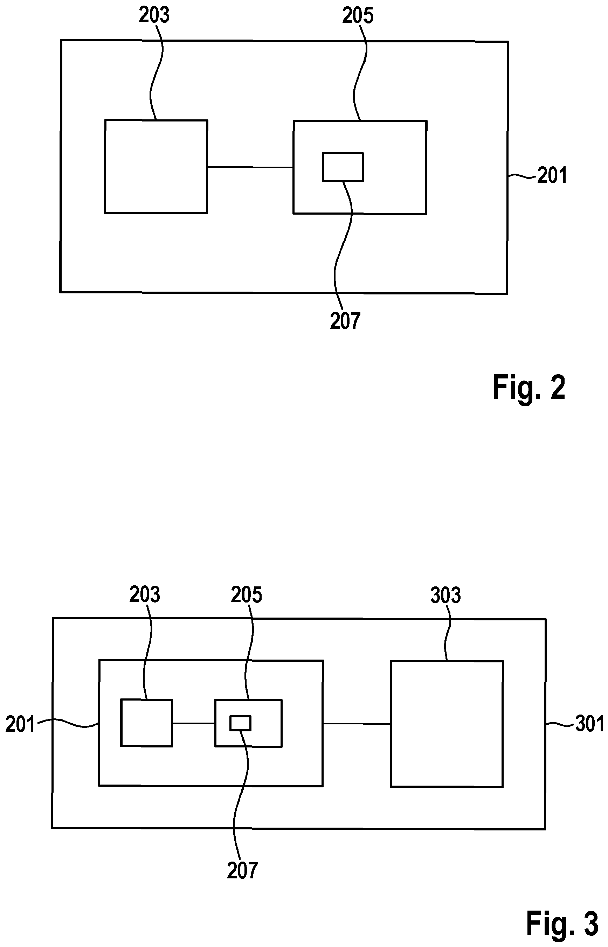

Fig. 2 zeigt eine Vorrichtung 201 zum Betreiben eines Fahrzeugs (nicht gezeigt).

Die Vorrichtung 201 umfasst einen Prozessor 203. Ferner umfasst die Vorrichtung 201 einen Speicher 205. In dem Speicher 205 ist ein Programm 207 abgelegt. Das Programm 207 ist konfiguriert, um auf dem Prozessor 203 ausgeführt zu werden, wobei das Programm 207 Anweisungen aufweist zum:
- Ermitteln eines jeweiligen Kraftschlusses der Fahrzeugräder.
- Ermitteln je Achse des Fahrzeugs, welches der jeweiligen Kraftschlüsse der Fahrzeugräder der größte ist,
- Ermitteln, welches von den jeweiligen größten Kraftschlüssen je Achse der kleinste Kraftschluss ist,
- Steuern einer Vordruckerzeugungseinrichtung abhängig von dem ermittelten kleinsten Kraftschluss der jeweiligen größten Kraftschlüsse je Achse, so dass
- die Vordruckerzeugungseinrichtung abhängig von dem ermittelten kleinsten Kraftschluss einen Bremsdruck in einem einkanaligen Bremskreis für die Fahrzeugräder regeln kann, so dass
- das Fahrzeug entsprechend dem geregelten Bremsdruck verzögert werden kann.

Das Programm 207 umfasst in weiteren nicht gezeigten Ausführungsformen Anweisungen zum Durchführen der Schritte des Verfahrens zum Betreiben eines Fahrzeugs gemäß zumindest einer der hier offenbarten Ausführungsformen.

Fig. 3 zeigt ein System 301 für ein Fahrzeug (nicht gezeigt).

Das System 301 umfasst die Vorrichtung 201 gemäß Fig. 2 sowie eine Vordruckerzeugungseinrichtung 303. Die Vordruckerzeugungseinrichtung 303 ist ausgebildet, einen Bremsdruck in einem einkanaligen Bremskreis für die Fahrzeugräder des Fahrzeugs zu regeln.

In einer nicht gezeigten Ausführungsform umfasst das System 301 Raddrehzahlfühler, die mit der Vorrichtung 201 verbunden sind. Das heißt, dass die Raddrehzahlsignale der Raddrehzahlfühler der Vorrichtung 201 zur Verfügung gestellt werden können. Basierend auf den Raddrehzahlsignalen werden dann insbesondere die jeweiligen Kraftschlüsse ermittelt.

Zusammenfassend umfasst die Erfindung also insbesondere den Gedanken, mittels einer Vordruckerzeugungseinrichtung, insbesondere mittels eines Bremskraftverstärkers, eine einkanalige Vordruckvariation in dem Bremskreis für sämtliche Fahrzeugräder durchzuführen. Hierbei ist erfindungsgemäß vorgesehen, dass für die Ansteuerung der Vordruckerzeugungseinrichtung zunächst pro Achse das Select-High-Prinzip angewandt wird, wobei die Ansteuerung zwischen den zwei Select-High-Ergebnissen über eine Select-Low-Arbitrierung ermittelt wird.

## Patentansprüche

1. Verfahren zum Betreiben eines Fahrzeugs, umfassend die folgenden Schritte:
- Ermitteln (101) eines jeweiligen Kraftschlusses der Fahrzeugräder.
- Ermitteln (103) je Achse des Fahrzeugs, welcher der jeweiligen Kraftschlüsse der Fahrzeugräder der größte ist, **gekennzeichnet durch** das
- Ermitteln (105), welches von den jeweiligen größten Kraftschlüssen je Achse der kleinste Kraftschluss ist,
- Steuern (107) einer Vordruckerzeugungseinrichtung abhängig von dem ermittelten kleinsten Kraftschluss der jeweiligen größten Kraftschlüsse je Achse, so dass
- die Vordruckerzeugungseinrichtung abhängig von dem ermittelten kleinsten Kraftschluss einen Bremsdruck in einem einkanaligen Bremskreis für die Fahrzeugräder regelt (109), so dass
- das Fahrzeug entsprechend dem geregelten Bremsdruck verzögert (111) wird.

2. Verfahren nach Anspruch 1, wobei während der Verzögerung entsprechend dem geregelten Bremsdruck momentane Kraftschlüsse aller Fahrzeugräder und eine momentane Fahrzeugverzögerung ermittelt werden, wobei, wenn die momentane Fahrzeugverzögerung größer gleich einem vorbestimmten Fahrzeugverzögerungsschwellwert ist, ermittelt wird, welcher der momentanen Kraftschlüsse der kleinste ist, wobei die Vordruckerzeugungseinrichtung abhängig von dem kleinsten momentanen Kraftschluss gesteuert wird, so dass die Vordruckerzeugungseinrichtung abhängig von dem kleinsten momentanen Kraftschluss den Bremsdruck in dem Bremskreis regelt, so dass das Fahrzeug entsprechend dem geregelten Bremsdruck weiter verzögert wird.

3. Verfahren nach Anspruch 1 oder 2, wobei bei einer Blockage von bis zu einem Fahrzeugrad je Achse während der Verzögerung des Fahrzeugs die Blockage zugelassen wird, so dass die Vordruckerzeugungseinrichtung unabhängig von der Blockage gesteuert wird, so dass der Bremsdruck unabhängig von der Blockage geregelt wird.

4. Verfahren nach einem der vorherigen Ansprüche, wobei das Ermitteln, welches von den jeweiligen größten Kraftschlüssen je Achse der kleinste Kraftschluss ist, durchgeführt wird, indem ein Stellsignal aus mehreren Stellsignalen ausgewählt wird, die basierend auf den jeweiligen größten Kraftschlüssen je Fahrzeugachse gebildet werden.

5. Verfahren nach einem der vorherigen Ansprüche, wobei das Ermitteln, welches von den jeweiligen größten Kraftschlüssen je Achse der kleinste Kraftschluss ist, umfasst:
- Ermitteln einer jeweiligen Fahrzeugradgeschwindigkeit der Fahrzeugräder
- Auswählen der kleinsten Fahrzeugradgeschwindigkeit aus den ermittelten Fahrzeugradgeschwindigkeiten,
- Definieren, dass der Kraftschluss desjenigen Fahrzeugsrads mit der kleinsten Fahrzeugradgeschwindigkeit der kleinste Kraftschluss der jeweiligen größten Kraftschlüsse je Achse ist.

6. Vorrichtung (201) zum Betreiben eines Fahrzeugs, umfassend:
- einen Prozessor (203),
- einen Speicher (205) und
- ein Programm (207), wobei
- das Programm in dem Speicher abgelegt und konfiguriert ist, um auf dem Prozessor ausgeführt zu werden, wobei das Programm Anweisungen aufweist zum:
- Ermitteln eines jeweiligen Kraftschlusses der Fahrzeugräder.
- Ermitteln je Achse des Fahrzeugs, welches der jeweiligen Kraftschlüsse der Fahrzeugräder der größte ist, **gekennzeichnet durch** das
- Ermitteln, welches von den jeweiligen größten Kraftschlüssen je Achse der kleinste Kraftschluss ist,
- Steuern einer Vordruckerzeugungseinrichtung abhängig von dem ermittelten kleinsten Kraftschluss der jeweiligen größten Kraftschlüsse je Achse, so dass
- die Vordruckerzeugungseinrichtung abhängig von dem ermittelten kleinsten Kraftschluss einen Bremsdruck in einem einkanaligen Bremskreis für die Fahrzeugräder regeln kann, so dass
- das Fahrzeug entsprechend dem geregelten Bremsdruck verzögert werden kann.

7. System (301) für ein Fahrzeug, umfassend die Vorrichtung (201) nach Anspruch 6 und eine Vordruckerzeugungseinrichtung (303), die ausgebildet ist, einen Bremsdruck in einem einkanaligen Bremskreis für die Fahrzeugräder des Fahrzeugs zu regeln.

8. Computerprogrammprodukt mit Anweisungen, die zur Ausführung auf einem Prozessor konfiguriert sind und die bei ihrer Ausführung auf dem Prozessor (203) der Vorrichtung (201) nach Anspruch 6 oder dem System (301) nach Anspruch 7 die Vorrichtung (201) respektive das System (301) veranlassen, das Verfahren nach einem der Ansprüche 1 bis 5 auszuführen.

## Claims

1. Method for operating a vehicle, comprising the following steps:
- determining (101) a respective grip value of the vehicle wheels,
- determining (103) which of the respective grip values of the vehicle wheels is the greatest on each axle of the vehicle,
**characterized by**
- determining (105) which of the respective greatest grip values is the smallest grip value on each axle,
- controlling (107) an admission pressure-generating device as a function of the determined smallest grip value of the respective greatest grip values per axle, with the result that
- the admission pressure-generating device regulates (109) a brake pressure in a single-channel brake circuit for the vehicle wheels as a function of the determined smallest grip value, with the result that
- the vehicle is decelerated (111) in accordance with the regulated brake pressure.

2. Method according to Claim 1, wherein during the deceleration instantaneous grip values of all the vehicle wheels and an instantaneous vehicle deceleration are determined in accordance with the regulated brake pressure, wherein when the instantaneous vehicle deceleration is greater than or equal to a predetermined vehicle deceleration threshold value it is determined which of the instantaneous grip values is the smallest, wherein the admission pressure-generating device is controlled as a function of the smallest instantaneous grip value, with the result that the admission pressure-generating device regulates the brake pressure in the brake circuit as a function of the smallest instantaneous grip value, with the result that the vehicle is decelerated further in accordance with the regulated brake pressure.

3. Method according to Claim 1 or 2, wherein in the case of locking of up to one vehicle wheel per axle during the deceleration of the vehicle, the locking is permitted with the result that the admission pressure-generating device is controlled independently of the locking, with the result that the brake pressure is regulated independently of the locking.

4. Method according to one of the preceding claims, wherein it is determined which of the respective greatest grip values per axle is the smallest grip value by selecting an actuation signal from a plurality of actuation signals which are formed on the basis of the respective greatest grip values for each vehicle axle.

5. Method according to one of the preceding claims, wherein the determination as to which of the respective greatest grip values per axle is the smallest grip value comprises:
- determining a respective vehicle wheel speed of the vehicle wheels,
- selecting the smallest vehicle wheel speed from the determined vehicle wheel speeds,
- defining that the grip value of that vehicle wheel with the smallest vehicle wheel speed is the smallest grip value of the respective greatest grip values per axle.

6. Device (201) for operating a vehicle, comprising:
- a processor (203),
- a memory (205), and
- a program (207), wherein
- the program is stored in the memory and configured to be executed on the processor, wherein the program has instructions for:
- determining a respective grip value of the vehicle wheels,
- determining which of the respective grip values of the vehicle wheels is the greatest for each axle of the vehicle,
**characterized by**
- determining which of the respective greatest grip values is the smallest grip value for each axle,
- controlling an admission pressure-generating device as a function of the determined smallest grip value of the respective greatest grip values for each axle, with the result that
- the admission pressure-generating device can regulate a brake pressure in a single-channel brake circuit for the vehicle wheels as a function of the determined smallest grip value, with the result that
- the vehicle can be decelerated in accordance with the regulated brake pressure.

7. System (301) for a vehicle, comprising the device (201) according to Claim 6, and an admission pressure-generating device (303) which is designed to regulate a brake pressure in a single-channel brake circuit for the vehicle wheels of the vehicle.

8. Computer program product with instructions which are configured for executing on a processor and which, when executed on the processor (203) of the device (201) according to Claim 6 or the system (301) according to Claim 7, cause the device (201) or the system (301) to execute the method according to one of Claims 1 to 5.

## Revendications

1. Procédé pour faire fonctionner un véhicule, comprenant les étapes suivantes :
- détermination (101) d'une adhérence respective des roues de véhicule,
- détermination (103), par essieu du véhicule, du fait de savoir laquelle des adhérences des roues de véhicule est la plus élevée,
**caractérisé par** la
- détermination (105) du fait de savoir laquelle, parmi les adhérences respectivement les plus élevées par essieu, est la plus faible adhérence,
- commande (107) d'un dispositif de génération de pression d'alimentation en fonction de la plus faible adhérence déterminée parmi les adhérences respectivement les plus élevées par essieu, de sorte que
- le dispositif de génération de pression d'alimentation régule une pression de freinage dans un circuit de freinage à un canal pour les roues de véhicule en fonction de la plus faible adhérence déterminée (109), de sorte que
- le véhicule est ralenti conformément à la pression de freinage régulée (111).

2. Procédé selon la revendication 1, les adhérences momentanées de toutes les roues de véhicule et un ralentissement momentané du véhicule étant déterminés pendant le ralentissement conformément à la pression de freinage régulée, celle des adhérences momentanées qui est la plus faible étant déterminée lorsque le ralentissement momentané du véhicule est égal ou supérieur à une valeur de seuil de ralentissement du véhicule prédéfinie, le dispositif de génération de pression d'alimentation étant commandé en fonction de l'adhérence momentanée la plus faible, de sorte que le dispositif de génération de pression d'alimentation régule la pression de freinage dans le circuit de freinage en fonction de l'adhérence momentanée la plus faible, de sorte que le ralentissement du véhicule se poursuive conformément à la pression de freinage régulée.

3. Procédé selon la revendication 1 ou 2, le blocage étant autorisé dans le cas d'un blocage d'un maximum d'une roue de véhicule par essieu pendant le ralentissement du véhicule, de sorte que le dispositif de génération de pression d'alimentation soit commandé indépendamment du blocage, de sorte que la pression de freinage soit régulée indépendamment du blocage.

4. Procédé selon l'une des revendications précédentes, la détermination du fait de savoir laquelle, parmi les adhérences respectivement les plus élevées par essieu, est la plus faible adhérence, étant effectuée en sélectionnant un signal de réglage parmi plusieurs signaux de réglage qui sont formés en se basant sur les adhérences respectivement les plus élevées par essieu du véhicule.

5. Procédé selon l'une des revendications précédentes, la détermination du fait de savoir laquelle, parmi les adhérences respectivement les plus élevées par essieu, est la plus faible adhérence comprenant :
- détermination d'une vitesse de roue de véhicule respective des roues de véhicule,
- sélection de la vitesse de roue de véhicule la plus faible parmi les vitesses de roue de véhicule déterminées,
- définition que l'adhérence de la roue de véhicule ayant la vitesse de roue de véhicule la plus faible est l'adhérence la plus faible parmi les adhérences respectivement les plus élevées par essieu.

6. Appareil (201) pour faire fonctionner un véhicule, comprenant :
- un processeur (203),
- une mémoire (205) et
- un programme (207),
- le programme étant stocké dans la mémoire et configuré pour être exécuté sur le processeur, le programme possédant des instructions pour :
- déterminer une adhérence respective des roues de véhicule,
- déterminer, par essieu du véhicule, laquelle des adhérences des roues de véhicule est la plus élevée,
**caractérisé par** la
- détermination du fait de savoir laquelle, parmi les adhérences respectivement les plus élevées par essieu, est la plus faible adhérence,
- commande d'un dispositif de génération de pression d'alimentation en fonction de la plus faible adhérence déterminée parmi les adhérences respectivement les plus élevées par essieu, de sorte que
- le dispositif de génération de pression d'alimentation puisse réguler une pression de freinage dans un circuit de freinage à un canal pour les roues de véhicule en fonction de la plus faible adhérence déterminée, de sorte que
- le véhicule puisse être ralenti conformément à la pression de freinage régulée.

7. Système (301) pour un véhicule, comportant l'appareil (201) selon la revendication 6 et un dispositif de génération de pression d'alimentation (303) qui est configuré pour réguler une pression de freinage dans un circuit de freinage à un canal pour les roues de véhicule du véhicule.

8. Produit de programme informatique comprenant des instructions qui sont configurées pour être exécutées sur un processeur et qui, lors de leur exécution sur le processeur (203) de l'appareil (201) selon la revendication 6 ou le système (301) selon la revendication 7, amènent respectivement l'appareil (201) ou le système (301) à mettre en oeuvre le procédé selon l'une des revendications 1 à 5.
